Europäisches Patentamt

European Patent Office

Office européen des brevets

(11) Veröffentlichungsnummer: **0 188 655 B1**

# EUROPÄISCHE PATENTSCHRIFT

(45) Veröffentlichungstag der Patentschrift: **13.05.92**

(21) Anmeldenummer: **85108340.2**

(22) Anmeldetag: **05.07.85**

(51) Int. Cl.⁵: **G11B 5/41**, G11B 23/04

(54) **Reinigungskassette.**

(30) Priorität: **19.01.85 DE 3501742**
　　　　　　　**19.01.85 DE 8501407 U**

(43) Veröffentlichungstag der Anmeldung:
**30.07.86 Patentblatt 86/31**

(45) Bekanntmachung des Hinweises auf die
Patenterteilung:
**13.05.92 Patentblatt 92/20**

(84) Benannte Vertragsstaaten:
**AT BE CH DE FR GB IT LI LU NL SE**

(56) Entgegenhaltungen:
**WO-A-84/04840**　　　**DE-A- 2 158 994**
**US-A- 3 761 994**　　　**US-A- 3 995 214**
**US-A- 4 107 810**　　　**US-A- 4 514 777**

**PATENT ABSTRACTS OF JAPAN, Band 8, Nr.
113 (P-276)[1550], 26. Mai 1984; & JP - A - 59
22217 (FUJITSU) 04.02.1984**

(73) Patentinhaber: **Müller, Hans
Silvrettastrasse 14
W-7000 Stuttgart 60(DE)**

(72) Erfinder: **Müller, Hans
Silvrettastrasse 14
W-7000 Stuttgart 60(DE)**

(74) Vertreter: **Schuster, Gregor, Dipl.-Ing.
Patentanwälte Schuster & Thul Wiederholdstrasse 10
W-7000 Stuttgart 1(DE)**

## Beschreibung

Die Erfindung geht aus von einer Reinigungskassette für den Schreib- und Lesekopf von Magnetbandaufzeichnungsgeräten nach der Gattung des Hauptanspruchs.

Der Schreib- und Lesekopf eines Magnetbandaufzeichnungsgeräts ist gegen Verschmutzung besonders empfindlich, da Schmutzteilchen in Form von Band- oder Metallabrieb zu Schreibfehlern und Lesefehlern führen können, was im Extremfall zu Speicherfehlern oder gar Datenausfall führen kann. Derartige Magnetbandaufzeichnungsgeräte werden meist für Archivierungszwecke eingesetzt, so daß Ausfallfehler meist nicht heilbar sind.

Ein Problem der Reinigung eines Schreib- und Lesekopfes eines Magnetbandaufzeichnungsgerätes besteht darin, daß die dem Magnetband zugewandte Fläche dieses Kopfes uneben ist. Außerdem wird bei manchen Magnetbandaufzeichnungsgeräten der Schreib- und Lesekopf zur Herausnahme der Bandkassette verschwenkt, um einerseits die Herausnahme zu erleichtern und andererseits eine Beschädigung der Geberflächen bzw. des Bandes zu vermeiden.

Üblicherweise wird ein Schreib- und Lesekopf eines Magnetbandaufzeichnungsgerätes alls vier bis sechs Stunden Laufzeit gereinigt, um die erforderliche Aufnahmequalität erhalten zu können.

Bei einer bekannten gattungsgemäßen Reinigungskassette, wie sie in der US-PS 3,761,994 beschrieben ist, besteht der Putzteil aus einem weichen, saugfähigen Filz in Form eines flachen, rechteckigen Stückes, welches an dem dem Schreib- und Lesekopf zugewandten Ende eines als Trägerteil dienenden Hebels zwischen Klammern dieses Hebels auswechselbar festgeklemmt ist. Der Hebel ist etwa in der Mitte der Reinigungskassette in Bandlaufrichtung schwenkbar gelagert und von der Rückseite der Reinigungskassette betätigbar. Außerdem ist dieser Hebel auf einem Langloch gelagert und in Richtung Schreib- und Lesekopf durch eine Feder belastet, wodurch der Putzteil an den Schreib- und Lesekopf gepreßt wird. Der Schwenkbereich des Hebels ist durch in der Reinigungskassette vorhandene Anschläge begrenzt, um zu vermeiden, daß der Putzteil über den Schreib- und Lesekopf hinausfährt und aufgrund der Feder hinter bzw. vor den Schreib- und Lesekopf geschoben wird mit der Folge, daß sich der Putzteil verhaken könnte. Obwohl der Putzteil offensichtlich etwas breiter ist als die tatsächliche durch die Magnetgeber entnehmbare Bandlaufbahn, kann über diese Reinigungsvorrichtung der durch den Putzteil erfaßte Schmutz in Bandlaufrichtung nicht befriedigend entfernt werden, da er durch den Putzteil über den Magnetgebern auf dem Schreib- und Lesekopf nur hin und her gerieben wird. Das Filzmaterial muß relativ steif sein, um beim Putzen nicht abzuknicken oder aufgrund der Federwirkung zusammengedrückt zu werden.

Bei einer anderen bekannten Reinigungskassette, wie sie in der DE-OS 21 58 994 beschrieben ist, wird der Reiniger auf der ihm zugewandten Seite des Schreib- und Lesekopfes linear hin und her bewegt, wobei er aus einem Filzelement besteht, das auf einem elastischen porösen Material befestigt ist. Diese bekannte Reinigungsmethode hat verschiedene Nachteile. Dadurch, daß die dem Schreib- und Lesekopf zugewandte Fläche des Reinigers eben, verhältnismäßig groß und stets in einer mindestens teilweisen Überdeckung mit der ihm zugewandten Schreib- und Lesekopffläche ist, wird der Schmutz in die Unebenheit dieser Schreib- und Lesekopffläche hineinverteilt. Darüber hinaus ist aufgrund der großflächigen Berührung zwischen Putzteil (Filz) und Schreib- und Lesekopf (uneben) ein verhältnismäßig hoher Anpreßdruck erforderlich, was erfahrungsgemäß dazu führt, daß sich der Schreib- und Lesekopf, der sich bei den meisten Geräten auch quer zur Verschieberichtung und zwar selbständig justiert, beispielsweise beim Einfahren einer neuen Spur, aufgrund dieser Dauerdruckbelastung in eine für die Reinigung ungünstige Lage verschiebt. Diese bei einer derartig großflächigen Reinigung erforderliche hohe Presskraft belastet außerdem andere Geräteteile, wie beispielsweise der Stellmotor (Steppermotor), der den Schreib- und Lesekopf justiert. Bei dieser bekannten Reinigungskassette wird allerdings vor allem eine Befeuchtung der Geberfläche des Schreib- und Lesekopfes angestrebt, allerdings mit der Folge, daß der Schmutz erst recht in die Vertiefungen des Kopfes geschoben wird.

Die erfindungsgemäße Reinigungskassette mit den kennzeichnenden Merkmalen des Hauptanspruchs hat demgegenüber den Vorteil, daß aufgrund der Wölbung des Putzteiles sich dieses den Unebenheiten des Schreib- und Lesekopfes besser anpassen kann, und daß durch den entsprechend ausgestalteten Halteteil des Putzteils dieses leicht und schnell ausgewechselt werden kann, wenn es den Schmutz aufgesogen hat. Hinzu kommt vor allem, daß der Putzteil den Schreib- und Lesekopf vollständig überfährt, wobei in Vertiefungen eindringt oder gegenüber in Bewegungsrichtung sich entgegenstellenden Widerständen nachgibt, so daß er, solange er den Schreib- und Lesekopf überfährt, in ständigem Kontakt mit den zu reinigenden Kopfflächen bleibt. Da zudem der Putzteil den Schreib- und Lesekopf vollständig überfährt, kann der Schmutz von diesem vorteilhafterweise auch vollständig entfernt werden. Erst nach dem Hinausfahren über den Schreib- und Lesekopf kann sich das während des Führens auf dem Schreib- und Lesekopf leicht zusammengepreßte Material wieder strecken, um dabei eine Saugwirkung zu entwikkeln. Da bei den meisten bekannten Reinigungskassetten nach Verschmutzung des Putzteils das Auswechseln umständlich ist, was eine solche Reinigung verhältnismäßig teuer macht, kann vorteilhafterweise durch die Verwendung eines Halteteils und einer Steckverbindung und das damit gegebene leichte Auswechseln des Putzteils bei der Erfindung die Kassette schnell wieder einsatzbereit sein und es kann abwechselnd oder nacheinander eine Naß- und eine Trockenreinigung vorgenommen werden, indem lediglich der Reiniger ausgetauscht wird.

Nach einer vorteilhaften Ausgestaltung der Erfindung weist der Putzteil etwa die Breite der Kassette und damit eine größere Breite als die Bandgeberbahn auf. Da der Putzteil somit wesentlich breiter sein kann als die Bandgeberbahn (Bandlaufbahn), können auch die seitlich der Laufbahn vorhandenen Bereiche des Schreib- und Lesekopfes gründlich gereinigt werden, wodurch vor allem verhindert wird, daß sich dort ansammelnde Schmutzteilchen wieder auf die Geberbahn des Schreib- und Lesekopfes fallen können.

Die Benetzung mit einem Lösungsmittel ist bei einem derartigen gewölbten schmutzaufsaugenden Putzteil sehr einfach durchführbar, da dieses aus saugfähigem Material besteht.

Nach einer vorteilhaften Ausgestaltung der Erfindung weist das Halteteil an einem Schieber angeordnete Klemmlaschen zur Befestigung des Putzteils auf, wobei das Halteteil zur Auswechslung des Putzteils in einer Schiene des Trägerteils mindestens quer zu der Arbeitsrichtung des Trägerteils geführt ist.

Der Putzteil kann nach einer weiteren Ausgestaltung der Erfindung aus einem an den Enden am Halteteil befestigten und nach außen gewölbten Band bestehen. Aufgrund dieser Anordnung ist der Putzteil nicht nur in einfachster Weise und belastungsfähig am Halteteil befestigbar, sondern er ist auch noch dann reinigungsfähig, wenn der Druck, mit dem er auf den Schreib- und Lesekopf gedrückt wird, unterschiedlich ist. So kann das Material zu Beginn des Putzvorgangs stärker als gegen Ende des Arbeitsweges zusammengepreßt werden, um während dieses Weges allmählich Schmutz aufsaugend wieder auseinander zu gehen.

Nach einer vorteilhaften Ausgestaltung der Erfindung ist der Putzteil durch eine in der Reinigungskassette angeordnete Befeuchtungseinrichtung in seiner End- oder Ausgangslage befeuchtbar.

Nach weiteren vorteilhaften Ausgestaltungen der Erfindung kann der Reiniger entweder durch ein in der Reinigungskassette angeordnetes Federwerk durch das Magnetbandaufzeichnungsgerät selbst oder manuell von außen angetrieben werden.

Zum Antrieb durch das Magnetbandaufzeichnungsgerät dient der Antrieb, der auch für die Magnetbänder verwendet wird.

Für den manuellen Antrieb kann am Trägerteil ein in der Reinigungskassette längsverschiebbar geführter Betätigungsarm angeordnet sein, an dem ein durch eine in der Wand der Reinigungskassette vorhandene Ausnehmung nach außerhalb ragender Griff des Betätigungsarms einkoppelbar ist. Als Kopplungseinrichtung kann eine Gewindeverbindung, aber auch eine Schnappverbindung dienen, wobei mehrere derartige Kopplungseinrichtungen am Betätigungsarm und Ausnehmungen in der Wand vorgesehen sind für verschiedene alternative Lagen des Griffes am Betätigungsarm, da je nach Gestaltung des Magnetbandaufzeichnungsgeräts unterschiedliche Zugänglichkeiten gegeben sind. Bei manchen Geräten ist ein Zugang nur von der seitlichen Schmalseite her möglich, bei anderen nur von unten und bei wieder anderen Geräten nur von vorne, nämlich der großen Seitenfläche her. Diese Ausgestaltung der Erfindung ermöglicht vorteilhafterweise die Verwendung nur einer Kassette für verschiedene Geräte, wobei je nach Gerätetyp der Griff an einer anderen Stelle des Betätigungsarms eingekoppelt wird.

Weitere Vorteile und vorteilhafte Ausgestaltungen der Erfindung sind der nachfolgenden Beschreibung, der Zeichnung und den Ansprüchen entnehmbar.

Zeichnung

Ein Ausführungsbeispiel des Gegenstandes der Erfindung ist in mehreren Varianten in der Zeichnung dargestellt und wird im folgenden näher beschrieben. Es Zeigen in vereinfachter Darstellung:

Fig. 1    die Seitenansicht eines Magnetbandaufzeichnungsgeräts mit einer eingesetzten Magnetbandkassette;

Fig. 2    eine erfindungsgemäße Reinigungskassette in der Seitenansicht;

Fig. 3    einen Schnitt nach Linie III-III in Fig. 2;

Fig. 4    eine Variante dieses Ausführungsbeispiels mit änderbarer Lage des Griffs und

Fig. 5    eine weitere Variante mit Federantrieb des Reinigers.

Beschreibung des Ausführungsbeispiels

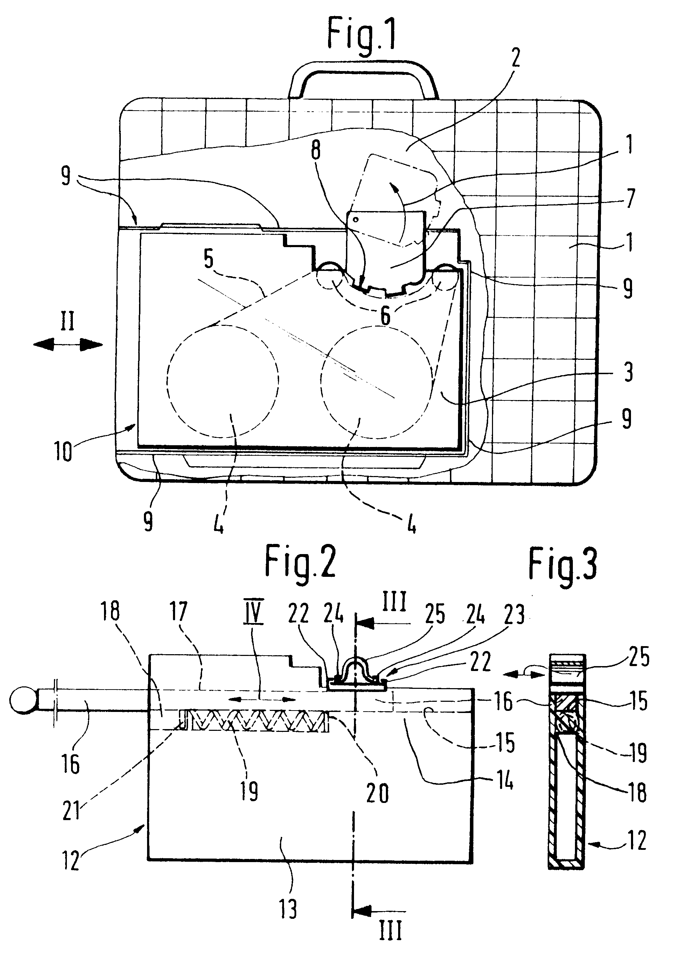

Bei dem in Fig. 1 in der Seitenansicht dargestellten Magnetbandaufzeichnungsgerät 1 ist über eine Ausbruchstelle 2 eine Magnetbandkassette 3 gezeigt, in der Spulen 4 und Magnetband 5 angedeutet sind. Das Magnetband 5 läuft über Walzen 6 an einer Stelle aus dem Gehäuse der Magnetbandkassette 3 heraus und wirkt dort mit einem Schreib- und Lesekopf 7 des Magnetbandaufzeichnungsgeräts 1 zusammen. Dieser Schreib- und Lesekopf 7 kann für die Herausnahme der Kassette 3 in Richtung des Pfeiles I nach oben geschwenkt werden. Diese Art der Lageänderung des Schreib- und Lesekopfes kann je nach Magnetbandaufzeichnungsgerät unterschiedlich sein,und zwar weitgehend davon abhängig, wie die Magnetbandkassette in das Gerät eingesetzt wird. Die dem Magnetband 5 zugewandte gebertragende Seite 8 des Schreib- und Lesekopfes 7 weist insgesamt eine unebene Fläche auf, indem sie nur an den für die Aufnahme entscheidenden Stellen dem Magnetband 5 gegenüber möglichst dicht kommt. Die Magnetbandkassette 3 wird in Richtung des Doppelpfeiles II eingesetzt bzw. herausgenommen. Die für das exakte Arbeiten des Schreib- und Lesekopfes 7 und damit die Lage der Kassette zum Magnetbandaufzeichnungsgerät 1 überhaupt wird durch Führungs- und Anschlagsflächen 9 in dem die Kassette 3 aufnehmenden Raum 10 des Aufzeichnungsgerätes 1 erzielt.

In Fig. 2 ist ebenfalls in Seitenansicht eine erfindungsgemäße Reinigungskassette 12 dargestellt, deren Kantenabmessungen denen der Magnetbandkassette 3 entsprechen und die rein räumlich mit dieser austauschbar ist, so daß sie nach Einsetzen im Magnetbandaufzeichnungsgerät an den Führungs- und Anschlagsflächen 9 des Raums 10 (Fig. 1) anliegt und dadurch eine definierte Lage gegenüber dem Schreib- und Lesekopf 7 einnimmt. Während der untere Teil 13 dieser Kassette lediglich der Raumformbildung dient, ist im oberen Teil 14 eine zum Teil nach oben offene Führungsausnehmung 15 rechteckigen Querschnitts vorgesehen, in der in Richtung des Doppelpfeiles IV, also in Längsrichtung ein stabartiger Betätigungsarm 16 geführt ist. Dieser Betätigungsarm 16 wird durch einen Gehäuseabschnitt 17, welcher die Führungsausnehmung 15 nach oben teilweise abdeckt, am Herausfallen gehindert. Ebenfalls in Längsrichtung ist unterhalb der Führungsausnehmung 15 eine Aussparung 18 vorgesehen, die zur Aufnahme einer Rückstellfeder 19 dient. Die Rückstellfeder 19 greift einerseits am Ende 20 der Aussparung an und andererseits an einem in die Aussparung 18 kragenden und mit dem Betätigungsarm 16 verbundenen Steg 21 an.

Auf dem Betätigungsarm 16 ist in dem Abschnitt, für den die Führungsausnehmung 15 nach oben offen ist, über eine Halteschiene 22 ein Reiniger 23 in Betätigungsrichtung mitgeführt, der quer zur Arbeitsrichtung IV des Betätigungsarmes 16 herausschiebbar und damit auswechselbar ist. Dieser Reiniger weist ein Halteteil 24 auf, der in Form von Klemmlaschen ein als Putzteil dienendes Band 25 festhält, welches aufgrund einer gewölbten Einspannung walkartig bei Auftreten eines Widerstandes nachgiebt und vorzugsweise aus textilem, aber saugfähigem Material besteht.

Die beschriebene Reinigungskassette arbeitet wie folgt:
Nach Einsetzen gemäß des Pfeiles II in das Magnetaufzeichnungsgerät 1 und nach Herunterschwenken des Schreib- und Lesekopfes 7 in die in Fig. 1 durchgezeichnete Lage liegt der Putzteil 25 links von diesem Schreib- und Lesekopf. Der Betätigungsarm 16 wird sodann von außerhalb des Magnetbandaufzeichnungsgerätes 1 (Fig. 1) und entgegen der Rückstellfeder 19 nach rechts geschoben, wobei der Putzteil 25 entlang der der Reinigungskassette 12 zugewandten Seite des Schreib- und Lesekopfes 7 streift. Hierbei werden nicht nur die die Geber 8 aufnehmenden Abschnitte dieses Kopfes gereinigt, sondern auch davor-, dazwischen-,daneben-und dahinterliegende Abschnitte. Wie auch Fig. 3 entnehmbar ist, hat der Putzteil 25 in etwa die Breite der Reinigungskassette 12 und damit auch der Magnetbandkassette 10 und des Schreib- und Lesekopfes 7. Sobald das Putzteil 25 verschmutzt ist, wird es quer zur Betätigungsrichtung aus der Halteschiene 22 geschoben, um entweder gereinigt zu werden oder durch ein sauberes Putzteil ausgewechselt zu werden.

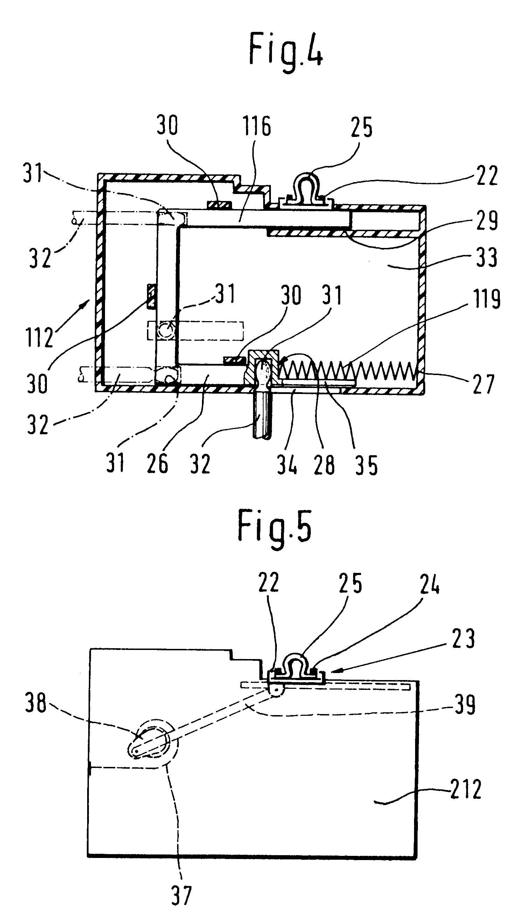

Bei der in Fig. 4 dargestellten Variante des Ausführungsbeispiels wird der gesamte Innenraum der Reinigungskassette genutzt. Der Betätigungsarm 116 ist hier U-förmig ausgebildet, wobei die Halteschiene 22 an dem einen freien Schenkel des Betätigungsarms 116 angeordnet ist, während am anderen freien Schenkel 26 die Rückstellfeder 119 angreift. Die Rückstellfeder 119 stützt sich dabei einerseits an der Wand 27 der Reinigungskassette 112 und andererseits an der Stirnseite 28 des freien Schenkels 26 ab. Der Betätigungsarm 116 ist durch Wandabschnitte 29 und die Seitenwände verbindende Querstege 30 geführt und in der gezeigten Ausgangslage gehalten. In Öffnungen 31 des Betätigungsarms 116, von denen nur vier dargestellt sind kann je nach Magnetaufzeichnungsgerät und damit Zugänglichkeit ein Griff 32 eingeschnappt werden, um damit den Betätigungsarm 116 bzw. den Putzteil 25 zu verschieben. Diese Schnappverbindung als Koppelung zwischen Griff 32 und Betätigungsarm 116 kann in bekannter Weise ausgebildet sein. So kann beispielsweise das in die Öffnung 31 tauchende Ende des Griffes 32 ballig ausgebildet sein bei entsprechender balliger Ausbildung der Öffnung 31 im Betätigungsarm 116. Aufgrund der Elastizität der Materialien,beispielsweise Kunststoff kann das Einschnappen bewerkstelligt werden.

Damit der Innenraum 33 der Reinigungskassette 112 weitgehend nach außen geschlossen ist, wird eine für die Betätigungsbewegung des in eingebautem Zustand dargestellten, nach unten ragenden Griffes 32 erforderliche Längsnut 34 durch einen am Betätigungsarm 116 vorgesehenen Lappen 35 abgedeckt, welcher bei der Längsbewegung mitgeführt wird. Im übrigen arbeitet diese Variante wie jene, die in Fig. 2 und 3 dargestellt ist.

In Fig. 5 ist eine weitere Variante nur schematisch dargestellt. Der Putzteil 25 mit Halteteil 24 und Halteschiene 22 (wie in Fig. 2) wird hier durch eine Spiralfeder 37 angetrieben, die über eine Kurbel 38 und eine Stange 39 das BAD 23 in eine hin- und hergehende Bewegung versetzt. Natürlich kann statt einer Spiralfeder auch eine andere eingegebene Antriebskraft dienen und statt eines Kurbelantriebs irgendein anderer Antrieb. Bezeichnend ist jedenfalls, daß der Antrieb des Reinigers 23 durch eine dieser Reinigungskassette 212 eingegebene Antriebskraft erfolgt.

Bezugszahlenliste

| | |
|---|---|
| 1. | Magnetbandaufzeichnungsgerät |
| 2. | Bruchstelle |
| 3. | Magnetbandkassette |
| 4. | Spulen |
| 5. | Magnetband |
| 6. | Walzen |
| 7. | Schreib- und Lesekopf |
| 8. | Kleber |
| 9. | Führungs- und Anschlagsflächen |
| 10. | Raum zur Kassettenaufnahme |
| 11. | |
| 12. | Reinigungskassette |
| 13. | Unterer Gehäuseteil |
| 14. | Oberer Gehäuseteil |
| 15. | Führungsausnehmung |
| 16. | Betätigungsarm |
| 17. | Gehäuseabschnitt |
| 18. | Aussparung |
| 19. | Rückstellfeder |
| 20. | Ende der Aussparung |
| 21. | Steg am Betätigungsarm |
| 22. | Halteschiene |
| 23. | Reiniger |
| 24. | Halteteil |
| 25. | Putzteil |
| 26. | Freier Schenkel |
| 27. | Gehäusewand |
| 28. | Stirnseite |
| 29. | Wandabschnitt |
| 30. | Quersteg |
| 31. | Öffnung |
| 32. | Griff |
| 33. | Innenraum |
| 34. | Längsnut |
| 35. | Fahne |
| 36. | |
| 37. | Spiralfeder |
| 38. | Kurbel |
| 39. | Stange |
| 112. | Reinigungskassette 2. Variante |
| 116. | Betätigungsarm |
| 119. | Rückstellfeder |
| 212. | Reinigungskassette 3. Variante |

**Patentansprüche**

1. Reinigungskassette (12) für den Schreib- und Lesekopf (7) von Magnetbandaufzeichnungsgeräten (1)
   - mit beim Einsetzen zur Fixierung der Kassette (12) im Magnetbandaufzeichnungsgerät (1) erforderlichen Führungsabschnitten an der Reinigungskassette (12),
   - mit einer auf der dem Schreib- und Lesekopf (7) des Aufzeichnungsgerätes (1) zugewandten Seite der Kassette (12) vorgesehenen Reinigungsvorrichtung (22-25),
   - mit einem innerhalb der Seitenwände und relativ zur Reinigungskassette (12) in und entgegen der Bandlaufrichtung als Arbeitsrichtungen (IV) verschiebbaren und in ihr geführten Trägerteil (16) der Reinigungsvorrichtung
   - und mit einem am Trägerteil (16) angeordneten und dem Schreib- und Lesekopf (7) zugewandten Putzteil (25), wobei der Putzteil (25) breiter ist als die Bandlaufbahn am Schreib- und Lesekopf,

   dadurch gekennzeichnet,
   - daß der Putzteil in Richtung zum Schreib- und Lesekopf (7) hin gewölbt ist,
   - daß der Putzteil (25) in beiden Arbeitsrichtungen (IV) über die Länge des Schreib- und Lesekopfes (7) hinausführbar und derart nachgiebig ist, daß er bei Verschiebung in beide Arbeitsrichtungen (IV) im Bereich des Schreib- und Lesekopfes (7) in ständigem Kontakt mit den zu reinigenden Kopfflächen bleibt, wobei sein Material jeweils gegen Ende des Arbeitsweges auseinandergehend den Schmutz aufsaugt,
   - daß zwischen dem Putzteil (25) und dem Trägerteil (16) ein Halteteil (24) für den Putzteil (25) vorhanden ist
   - und daß der Putzteil (25) durch eine quer zur Arbeitsrichtung (IV) verlaufende Steckverbindung auswechselbar ist.

2. Reinigungskassette nach Anspruch 1, dadurch gekennzeichnet, daß der Putzteil (25) etwa die Breite der Kassette (3) aufweist.

**3.** Reinigungskassette nach Anspruch 1 oder 2, dadurch gekennzeichnet, daß das Halteteil (24) an einem Schieber angeordnete Klemmlaschen zur Befestigung des Putzteils (25) aufweist und daß das Halteteil (24) zur Auswechslung des Putzteils (25) in einer Schiene des Trägerteils (16) mindestens quer zu den Arbeitsrichtungen (IV) des Trägerteils (16) geführt ist.

**4.** Reinigungskassette nach einem der Ansprüche 1 bis 3, dadurch gekennzeichnet, daß der Putzteil (25) aus einem an den Enden am Halteteil (24) befestigten und nach außen gewölbten Band besteht.

**5.** Reinigungskassette nach einem der vorhergehenden Ansprüche, dadurch gekennzeichnet, daß der Putzteil (25) durch eine in der Reinigungskassette (12) angeordnete Befeuchtungseinrichtung in seiner End- bzw. Ausgangslage befeuchtbar ist.

**6.** Reinigungskassette nach einem der vorhergehenden Ansprüche, dadurch gekennzeichnet, daß der Antrieb des Reinigers (23) über ein in der Reinigungskassette (212) angeordnetes Federwerk (37-39) erfolgt.

**7.** Reinigungskassette nach einem der Ansprüche 1 bis 5, dadurch gekennzeichnet, daß der Reiniger durch das Magnetbandaufzeichnungsgerät selbst antreibbar ist.

**8.** Reinigungskassette nach einem der Ansprüche 1 bis 5, dadurch gekennzeichnet, daß der Reiniger (23) manuell und von außerhalb der Reinigungskassette (1) betätigbar ist.

**9.** Reinigungskassette nach Anspruch 8, dadurch gekennzeichnet, daß am Trägerteil (11&) ein in der Reinigungskassette (112) längsverschiebbar geführter Betätigungsarm (116, 26) angeordnet ist, an dem ein durch eine in der Wand der Reinigungskassette (112) vorhandene Ausnehmung (34) nach außerhalb ragender Griff (32) des Betätigungsarms einkoppelbar ist (Fig. 4).

**10.** Reinigungskassette nach Anspruch 9, dadurch gekennzeichnet, daß mehrere Öffnungen (31) am Betätigungsarm (116, 26) vorhanden sind für verschiedene unterschiedliche Lagen der Koppelung (31) des Griffes (32).

**11.** Reinigungskassette nach Anspruch 9 oder 10, dadurch gekennzeichnet, daß die Koppelung (31) zwischen Griff (32) und Betätigungsarm (116, 26) als Schnappverbindung ausgebildet ist.

**Claims**

**1.** A cleaning cassette (12) for the recording and playing hood (7) of magnetic tape recording machines (1)
   - with guide slots needed for inserting and locating the cassette (12) in the magnetic tape recording machine (1)
   - with a cleaning attachment (22-25) mounted on the side of the cassette (12) facing towards the recording and playing head (7) of the recording machine (1)
   - with a carrier (16) for the cleaning attachment which can be slid inside the sidewall and in relation to the cleaning cassette (12), and having its working direction (IV) contrary to the direction of travel of the tape,
   - and with an elasticated cleaning part (25) fitted to the carrier (16) and facing the recording and playing head (7), this cleaning part (25) being wider than the track in which the tape runs past the recording and playing head,
   the whole being characterised by:
   - the cleaning part being arched in the direction of the recording and playing head (7),
   - the cleaning part (25) being capable of being moved out in both working directions (IV) along the length of the writing and reading head (7) and being so flexible that, when pushed in either working direction (IV) in the area of the recording and playing head (7), it remains in constant contact with the surface of the head to be cleaned, its material opening and sucking up the dirt at the end of each working movement,
   - a holder (24) for the cleaning part (25) being present between the cleaning part (25) and the carrier (16),
   - and the cleaning part (25) being replaceable by means of a socket connection lying crossways to the working direction (IV).

**2.** A cleaning cassette on the lines of Claim 1, characterised by the cleaning part (25) being of approximately the same width as the cassette (3).

3. A cleaning cassette on the lines of Claim 1 or Claim 2, characterised by the holder (24) having fixing lugs arranged on a slide for holding the cleaning part (25), and by the holder (24), for the purpose of replacing the cleaning part (25), being led in a rail of the carrier (16) at least crossways to the working direction (IV) of the carrier (16).

4. A cleaning cassette on the lines of one of the Claims 1 to 3, characterised by the cleaning part (25) consisting of an band arched outwards and fastened at its ends by the holder (24).

5. A cleaning cassette on the lines of one of the foregoing Claims, characterised by the cleaning part (25) being wettable at its final or starting position by a wetting device fitted into the cleaning cassette (12).

6. A cleaning cassette on the lines of one of the foregoing Claims, characterised by the drive to the cleaner (23) being effected via a spring motor (37-39) arranged in the cleaning cassette (212).

7. A cleaning cassette on the lines of one of the Claims 1 to 5, characterised by the cleaner being driven by the magnetic tape recording machine itself.

8. A cleaning cassette on the lines of one of the Claims 1 to 5, characterised by the cleaner (23) being operable by hand an from outside the cleaning cassette (1).

9. A cleaning cassette on the lines of Claim 8, characterised by an operating arm (116, 26), which is led and can be slid longitudinally in the cleaning cassette (112) being fitted to the carrier (11&), to which arm a claw (32) projecting outwards through on aperture (34) arranged in the wall of the cleaning cassette (112) can be coupled (Fig. 4).

10. A cleaning cassette on the lines of Claim 9, characterised by a number of openings (31) being present on the operating arm (116, 26) for a number of different positions of the coupling (31) of the claw (32).

11. A cleaning cassette on the lines of Claim 9 or 10, characterised by the coupling (31) between the between the claw (32) and the operating arm (116, 26) being in the form of a snap-fastening.

**Revendications**

1. Cassette nettoyante (12) pour les têtes d'enregistrement et de lecture (7) de magnétoscopes (1)
   - comportant sur la cassette nettoyante elle-même (12) des segments de guidage nécessaires lors de la mise en place à la fixation de la cassette (12) dans le magnétoscope (1),
   - comportant un dispositif de nettoyage (22-25) prévu pour se trouver sur le côté de la cassette (12) tourné vers la tête d'enregistrement et de lecture (7) du magnétoscope (1),
   - comportant l'élément support (16) du dispositif de nettoyage, guidé en son sein et pouvant être déplacé à l'intérieur des parois latérales ainsi que, relativement par rapport à la cassette nettoyante (12), dans le sens normal et inverse du déroulement du ruban faisant office de sens de fonctionnement (IV)
   - et comportant un élément nettoyant (25) élastique disposé sur l'élément support (16) et orienté vers la tête d'enregistrement et de lecture (7) étant entendu que cet élément nettoyant (25) accuse une largeur supérieure à celle de la voie de déroulement du ruban sur la tête d'enregistrement et de lecture,
   caractérisée par le fait
   - que l'élément nettoyant est bombé en direction de la tête d'enregistrement et de lecture (7)
   - que l'élément nettoyant (25) peut, dans les deux sens de fonctionnement (IV), être mis en saillie audelà de la longueur de la tête d'enregistrement et de lecture (7) et qu'il est doué d'une telle flexibilité qu'en cas de décalage dans les deux sens de fonctionnement (IV), il demeure dans la zone de la tête d'enregistrement et de lecture (7) en contact permanent avec les surfaces de tête à nettoyer étant entendu que le matériau de cet élément nettoyant qui diverge respectivement vers la fin de la course de travail aspire les impuretés,
   - qu'entre l'élément nettoyant (25) et l'élément support (16), il existe un élément de maintien (24) pour l'élément nettoyant (25)
   - et que l'élément nettoyant (25) est interchangeable grâce à un connecteur placé transversalement au sens de fonctionnement (IV).

**2.** Cassette nettoyante selon la revendication 1, caractérisée par le fait que l'élément nettoyant (25) accuse approximativement la largeur de la cassette (3).

**3.** Cassette nettoyante selon la revendication 1 ou 2, caractérisée par le fait que l'élément de maintien (24) présente des attaches disposées sur un coulisseau servant à la fixation de l'élément nettoyant (25) et que l'élément de maintien (24) servant a échanger l'élément nettoyant (25) est guidé dans un rail de l'élément support (16) au moins transversalement aux sens de fonctionnement (IV) de l'élément support (16).

**4.** Cassette nettoyante selon l'une des revendications 1 à 3, caractérisée par le fait que l'élément nettoyant (25) est constitué d'un ruban fixé aux extrémités de l'élément de maintien (24) et bombé vers l'extérieur.

**5.** Cassette nettoyante selon l'une des revendications précédentes, caractérisée par le fait que l'élément nettoyant (25) est humidifiable dans sa position de fin de course, voire de sortie grâce à un dispositif humidificateur disposé dans la cassette nettoyante (12).

**6.** Cassette nettoyante selon l'une des revendications précédentes, caractérisée par le fait que l'entraînement du nettoyeur (23) est assuré par un organe à ressort (37-39) placé dans la cassette nettoyante (212).

**7.** Cassette nettoyante selon l'une des revendications 1 à 5, caractérisée par le fait que ce même nettoyeur peut être actionné par le magnétoscope lui-même.

**8.** Cassette nettoyante selon l'une des revendications 1 à 5, caractérisée par le fait que le nettoyeur (23) peut être commandé à la main et de l'extérieur de la cassette nettoyante (1).

**9.** Cassette nettoyante selon la revendication 8, caractérisée par le fait qu'est agencé sur l'élément support (116) un bras de commande (116, 26) placé dans la cassette nettoyante (112) de sorte à être déplaçable dans le sens longitudinal et que sur ce même bras, il est possible de fixer une poignée (32) du même bras faisant saillie vers l'extérieur au travers d'un creux (34) existant dans la paroi de la cassette nettoyante (112) (Fig. 4).

**10.** Cassette nettoyante selon la revendication 9, caractérisée par le fait qu'il existe plusieurs orifices (31) sur le bras de commande (116, 26) pour les diverses positions différentes de liaison (31) de la poignée (32).

**11.** Cassette nettoyante selon la revendication 9 ou 10, caractérisée par le fait que la liaison (31) reliant la poignée (32) au bras de commande (116, 26) présente la configuration d'un assemblage à enclenchement.

# Fig.1

# Fig.2    Fig.3

# Fig.4

# Fig.5